(19) Europäisches Patentamt
European Patent Office
Office européen des brevets

(11) Veröffentlichungsnummer: **0 036 100**
**B1**

(12) # EUROPÄISCHE PATENTSCHRIFT

(45) Veröffentlichungstag der Patentschrift: **15.06.83**

(51) Int. Cl.³: **C 09 B 45/00** // D06P3/60, C09B29/48

(21) Anmeldenummer: **81101254.1**

(22) Anmeldetag: **21.02.81**

(54) **Nickelkomplexfarbstoffe.**

(30) Priorität: **01.03.80 DE 3007966**

(43) Veröffentlichungstag der Anmeldung: **23.09.81 Patentblatt 81/38**

(45) Bekanntmachung des Hinweises auf die Patenterteilung: **15.06.83 Patentblatt 83/24**

(84) Benannte Vertragsstaaten: ***CH DE FR GB IT LI***

(56) Entgegenhaltungen:
**CH-A-402 811**
**DE-C-711 384**
**FR-A-1 386 619**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Dehnert, Johannes, Dr., Ottweilerstrasse 2, D-6700 Ludwigshafen (DE)**

**EP 0 036 100 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Nickelkomplexfarbstoffe

Die Erfindung betrifft Nickelkomplexe erhältlich durch Erhitzen einer oder mehrerer Verbindungen der allgemeinen Formel I

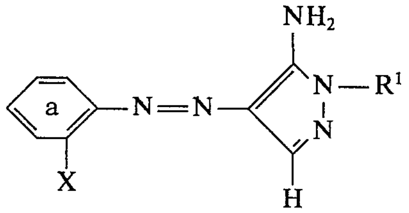

(I)

in der

$R^1$ $C_1$- bis $C_{10}$-Alkyl, Cyclohexyl, Methylcyclohexyl, gegebenenfalls durch Chlor oder Methyl substituiertes Phenyl-$C_1$- bis $C_4$-alkyl oder Furylmethyl und

X Fluor, Chlor, Brom oder Phenoxy sind und der Ring a noch zusätzlich substituiert sein kann,

in Gegenwart säurebindender Mittel und von Nickel abgebenden Verbindungen in organischen Lösungsmitteln.

Reste $R^1$ sind neben den bereits genannten z. B. $CH_3$, $C_2H_5$, $C_3H_7$, $C_4H_9$, $C_5H_{11}$, $C_6H_{13}$, $C_8H_{17}$,

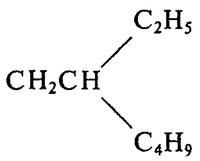 $CH(C_2H_5)_2$ $CH(C_3H_7)_2$ $C_9H_{19}$ 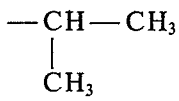

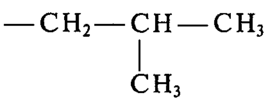

Benzyl, Chlorbenzyl, Methylbenzyl, Phenyläthyl, Phenylpropyl oder Phenylbutyl.

Der Ring a kann beispielsweise noch durch Fluor, Chlor, Brom, Trifluormethyl, $C_1$- bis $C_4$-Alkyl, Cyclohexyl, $C_1$- bis $C_4$-Alkoxy, Aroxy, Cyan, Nitro, $C_1$- bis $C_4$-Alkylsulfonyl, Arylsulfonyl, Carbonester, gegebenenfalls substituiertes Carbamoyl oder Sulfamoyl, gegebenenfalls substituiertes Phenylazo oder Phthaloyl substituiert sein.

Einzelne Substituenten sind neben den bereits genannten z. B. Methyl, Äthyl, n- oder i-Propyl, n-, i- oder t-Butyl, Methoxy, Äthoxy, Butoxy, Phenoxy, Chlorphenoxy, Methylphenoxy, Methylsulfonyl, Äthylsulfonyl, Phenylsulfonyl, $COOCH_3$, $COOC_2H_5$, $COOC_3H_7$, $COOC_4H_9$, $COOC_6H_{13}$, $COOC_8H_{17}$,

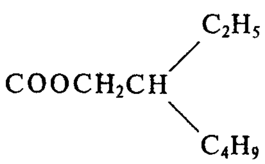

$COOC_{10}H_{21}$, $CONH_2$, $CONHCH_3$, $CONHC_2H_5$, $CONHC_4H_9$, $CON(CH_3)_2$, $CON(C_2H_5)_2$, die entsprechenden Sulfamoylreste sowie durch Fluor, Chlor, Brom, Methyl, Äthyl, Cyan, Nitro oder die genannten Carbonesterreste substituiertes Phenylazo.

Der Ring a kann weiterhin einen annellierten Ring tragen, der noch durch Chlor oder Brom substituiert sein kann.

Außerdem kann der Ring a die Konstitution

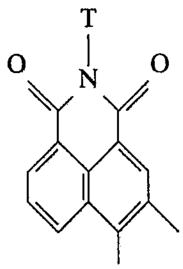 oder 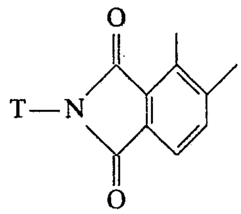

haben, wobei T Wasserstoff oder gegebenenfalls substituiertes Alkyl ist.

Einzelne Substituenten T sind z. B.:

$CH_3$ $C_2H_5$ $C_4H_9$ $C_6H_{13}$ 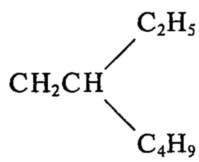 $CH_2CH_2OCH_3$ $(CH_2)_3OCH_3$

$CH_2C_6H_5$ $CH_2CH_2C_6H_5$ oder 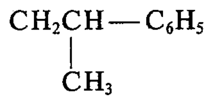

Zur Herstellung der Verbindungen der Formel I kann man eine Diazoniumverbindung von Verbindungen der Formel II

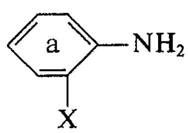

mit Kupplungskomponenten der Formel

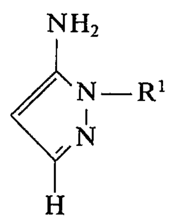

umsetzen.

Nickel abgebende Verbindungen zur Herstellung der erfindungsgemäßen Nickelkomplexe sind Nickel-sulfat, -acetat, -acetyl-acetonat oder -formiat und vorzugsweise Nickel-chlorid, -nitrat oder -carbonat.

Geeignete organische Lösungsmittel sind z. B. Dimethylsulfoxid, Diethylformamid, N-Methylpyrrolidon, Tetramethylharnstoff und vorzugsweise Dimethylformamid.

Die Reaktionstemperaturen liegen im Bereich von 30 bis ungefähr 210° C, insbesondere zwischen 50 und 160° C.

Als säurebindende Mittel werden dem Reaktionsgemisch beispielsweise Magnesiumoxid, Calciumcarbonat, Magnesiumcarbonat oder Natriumcarbonat und vorzugsweise Kaliumcarbonat zugesetzt.

In der Regel sind die Umsetzungen in 3 bis 30 Stunden beendet.

Es ist wahrscheinlich, daß die erfindungsgemäßen Nickelkomplexe zumindest teilweise den Strukturen

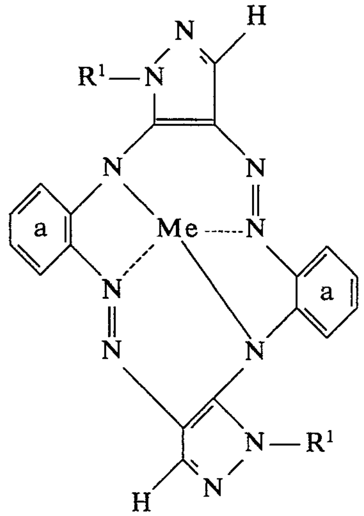

Formel I a

und

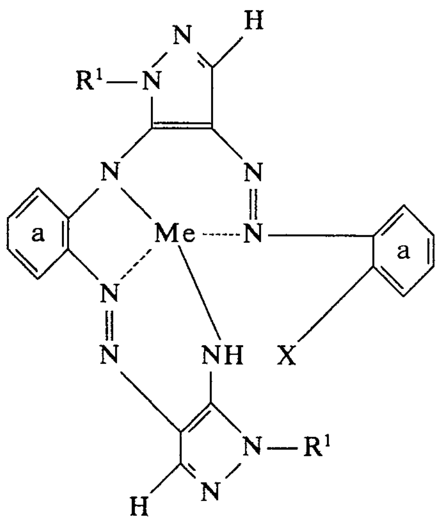

Formel I b

entsprechen. Die chromatografische Untersuchung zeigt jedoch, daß daneben in der Regel noch weitere Verbindungen vorliegen, über deren Struktur keine gesicherten Aussagen gemacht werden können.

Ausgehend von mehreren Verbindungen der Formel I erhält man noch komplexere Produktgemische.

Die Verbindungen der Formeln I eignen sich zum Färben von cellulosischen Fasern oder Cellulose enthaltenden Mischgeweben, vorzugsweise für Baumwolle und Polyester-Baumwollmischungen sowie für Polyester nach dem Thermosolier-Verfahren. Ferner sind sie zum Färben von Lacken und Kunststoffen und teilweise als Solventfarbstoffe oder als Pigmente brauchbar.

Nächstvergleichbare Verbindungen sind aus Zhurnal Obshchei Khimii, Band 45, Nr. 11, Seiten 2488–2492 (1975) sowie Khimiya Geterotsiklicheskikh Soedinenii, Nr. 9, Seiten 1258–1264 (1979) und der russischen Patentschrift 606 871 bekannt.

Bevorzugte Reste $R^1$ sind z. B. Cyclohexyl, Benzyl, Furylmethyl.

Für den Ring a sind z. B. folgende Substituenten bevorzugt:

Fluor, Chlor, Brom, Nitro, Methyl, 4-Chlorphenoxy, Phenylazo, 4'-Chlor-phenylazo, 2'- oder 3'-Methylphenylazo oder Phthaloyl.

Soweit die neuen Farbstoffe in Form wäßriger Dispersionen zur Anwendung kommen, lassen sie sich wie folgt in eine handelsfähige Farbstoffzubereitung überführen:

30 Teile Farbstoff,
6 Teile Dispergiermittel,
10 Teile Wasserretentionsmittel,
1 Teil Desinfektionsmittel und etwa
53 Teile Wasser werden in Rührwerkmühle bis zu einer Teilchengröße von ungefähr 0,5 μ vermahlen. Man erhält so eine lagerstabile Dispersion des Farbstoffs.

Beispiel 1

38 Teile des Farbstoffs 2,4,6-Trichloranilin → 1-Benzyl-5-aminopyrazol werden als getrocknetes Pulver zusammen mit 500 Raumteilen Dimethylformamid, 14 Teilen Nickelnitrat-Hexahydrat und 47 Teilen Kaliumcarbonat 6 Stunden bei 100° C gerührt. Nach dem Erkalten des Reaktionsgemisches wird der erhaltene Nickelkomplex der wahrscheinlichen Formel

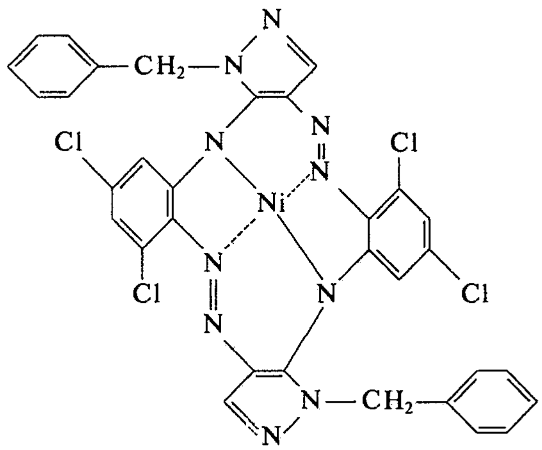

abgesaugt, mit Dimethylformamid, dann mit Methanol, anschließend mit heißem Wasser und wieder mit Methanol gewaschen. Nach dem Trocknen bei 70° C erhält man ein lockeres, dunkelolivgrünes Kristallpulver, das sich in heißem N-Methylpyrrolidon mit olivgrüner Farbe löst. Nach dem in der DE-C-1 811 796 oder der DE-A-2 524 243 oder DE-A-2 528 743 sowie der Patentanmeldung P 2 855 188 beschriebenen Verfahren erhält man mit dem Farbstoff auf Baumwolle oder Mischgeweben aus Baumwolle und Polyäthylenterephthalat olivgrüne Färbungen oder Drucke von hervorragenden Licht- und Naßechtheiten.

In Polystyrol bekommt man olivgrüne Einfärbungen mit sehr guten Echtheiten.

Beispiel 2

Verfährt man nach den Angaben von Beispiel 1, verwendet jedoch als Ausgangsfarbstoff 51 Teile 2,4,6-Tribromanilin → 1-Benzylaminopyrazol, so resultiert der entsprechende bromhaltige Nickelkomplex, der in Polystyrol olivgrüne Töne mit hervorragenden Echtheiten ergibt.

Beispiel 3

Setzt man in Beispiel 1 als Ausgangsfarbstoff 2,4-Difluor-6-bromanilin → 1-Benzyl-5-aminopyrazol ein, so wird ein Nickelkomplex der wahrscheinlichen Formel

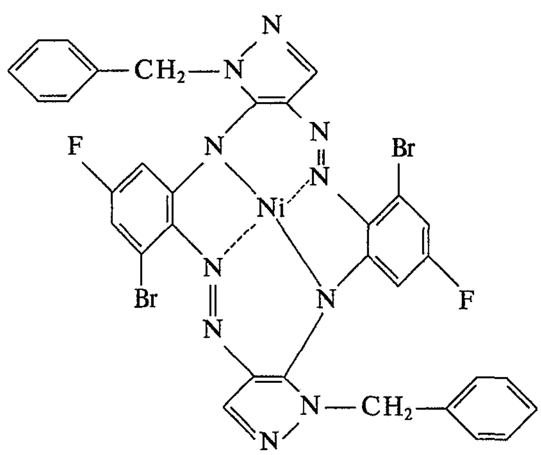

erhalten, der auf Baumwolle und Polyester oder auf Mischgeweben aus beiden Faserarten nach den in Beispiel 1 angegebenen Anwendungsverfahren hoch licht- und naßechte gelbgrüne Färbungen oder Drucke erzeugt.

Beispiel 4

Werden analog zu Beispiel 1 30 Teile von 2,4,6-Trichloranilin → 1-Methyl-5-aminopyrazol in 150 Teilen Dimethylformamid 15 Stunden bei 90° C umgesetzt, so läßt sich nach Erkalten durch Absaugen und Nachwaschen mit Dimethylformamid, Methanol und Wasser ein olivfarbenes Reaktionsprodukt isolieren, das als wäßrige Dispersion olivgrüne Färbungen auf Baumwolle-Polyester-Mischgeweben bzw. auf reinem Polyester nach dem Thermosolier-Verfahren mit hervorragenden Echtheiten ergibt. Der neue Farbstoff entspricht im wesentlichen der wahrscheinlichen Formel:

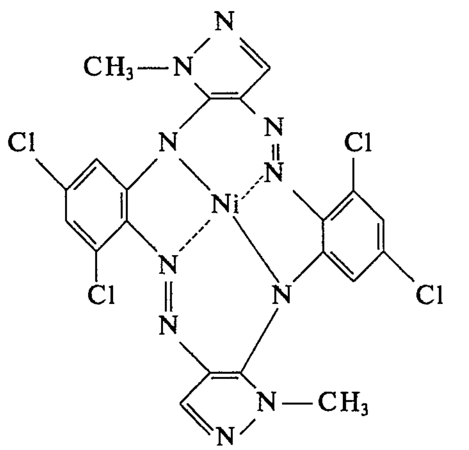

Entsprechend den bisher beschriebenen Methoden können aus den Verbindungen der Formel

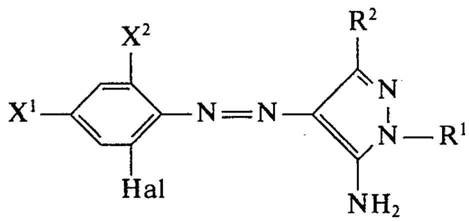

Hal = Cl oder Br

die entsprechenden Nickelkomplexe erhalten werden:

| Bsp. | $R_1$ | $R_2$ | $X_1$ | $X_2$ | Farbton | Substrat |
|---|---|---|---|---|---|---|
| 5 | 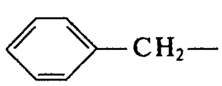 | H— | 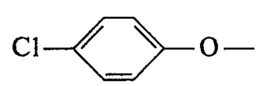 | Br— | oliv | BW; PS |
| 6 | 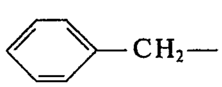 | H— | $(H_9C_4)_2N—CO—$ | Br— | oliv | BW; PS |
| 7 | 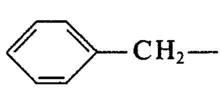 | H— | 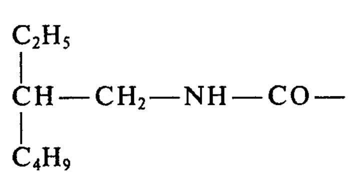 | Br— | oliv | PS |
| 8 | 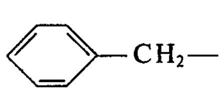 | H— | 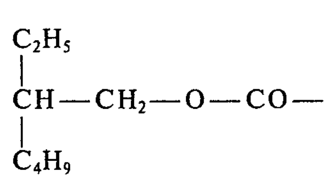 | Br— | oliv | PS |

Fortsetzung

| Bsp. | $R_1$ | $R_2$ | $X_1$ | $X_2$ | Farbton | Substrat |
|---|---|---|---|---|---|---|
| 9 | 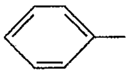 $-CH_2-$ | H— | $(CH_3)_2N-SO_2-$ | Cl— | oliv | PS |
| 10 | 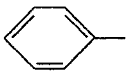 $-CH_2-$ | H— | H— | Cl— | oliv | BW/PES; PS |
| 11 | 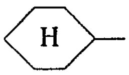 | H— | Cl— | Cl— | oliv | BW/PES; PS |
| 12 | 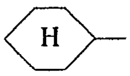 | H— | H— | Cl— | oliv | BW/PES; PS |
| 13 | 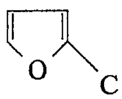 $CH_2-$ | H— | Cl— | Cl— | oliv | BW/PES; PS |
| 14 | 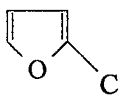 $CH_2-$ | H— | H— | Cl— | oliv | BW/PES; PS |
| 15 | $CH_3-CH(CH_3)-CH_2-$ | H— | H— | H— | olivbraun | BW/PES; PS |
| 16 | 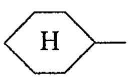 | H— | F— | Br— | gelbgrün | BW/PES; PS |
| 17 | 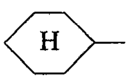 | H— | H— | Cl— | olivgrün | BW/PES; PS |
| 18 | 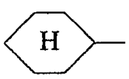 | H— | Cl—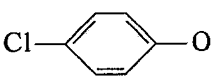—O— | Br— | oliv | BW/PES; PS |

BW = Baumwolle, PES = Polyester, PS = Polystyrol.

## Beispiel 19

Die Mischung aus 31 Teilen des getrockneten Kupplungsproduktes 2-Chloranilin → 1-Benzyl-aminopyrazol, 14 Teilen Nickelnitrat-Hexahydrat, 47 Teilen Kaliumcarbonat und 1000 Raumteilen Dimethylformamid wird 7 Stunden unter Rückflußbedingungen gerührt. Nach dem Erkalten wird der filtrierte Reaktionsansatz in eine verdünnte Natriumchlorid-Lösung eingerührt, die man sich aus 3000 Raumteilen Wasser und 1000 Raumteilen einer gesättigten Natriumchlorid-Lösung zubereitet hat. Der so ausgefällte Farbstoff wird abgesaugt, gut mit Wasser gewaschen und trockengesaugt. Die feuchte Paste wird auf übliche Weise in eine wäßrige Dispersion übergeführt und mit diesem Gewebe aus Baumwolle oder Baumwolle und Polyester entsprechend den in Beispiel 1 angeführten Verfahren gefärbt oder bedruckt, wobei Olivtöne mit hervorragenden Echtheiten erhalten werden. Der neue Farbstoff entspricht zum Teil der wahrscheinlichen Formel mit

R = $-CH_2-$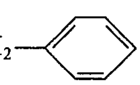

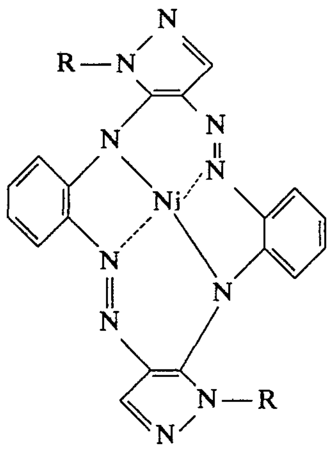

enthält jedoch weitere Produkte.

Beispiel 20

60 Teile o-Chloranilin → 1-Cyclohexyl-5-aminopyrazol werden zusammen mit 28 Teilen Nickelnitrat-Hexahydrat, 100 Teilen Kaliumcarbonat und 2000 Teilen Dimethylformamid 30 Stunden unter Rückfluß-Bedingungen gerührt und analog vorstehendem Beispiel aufgearbeitet. Der Farbstoff entspricht wahrscheinlich teilweise vorstehender Formel mit

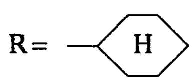

Ein Gewebe aus 65 Teilen Polyester-Faser und 35 Teilen mercerisierter Baumwolle wird mit einer Flotte imprägniert, die 10 g/l einer 20%igen flüssigen Zubereitung des obigen Dispersionsfarbstoffes und 80 g/l eines Quell- und Farbstofflösungsmittels aus einer Mischung aus 3 Teilen Polyäthylenglykol mit einem Molekulargewicht von 1500 und 1 Teil eines Umsetzungsprodukts aus 1 Mol Neopentandiamin und 15,6 Mol Äthylenoxid enthält. Der pH-Wert der Klotzflotte wird mit Glutarsäure auf 6 eingestellt. Das Gewebe wird mit der Klotzflotte imprägniert, wobei die Flottenaufnahme 45% beträgt. Das Gewebe wird dann 60 Sekunden bei einer Temperatur von 120°C getrocknet und 90 Sekunden bei 225°C in einem kontinuierlich arbeitenden Labortrockner fixiert. Danach wird es kalt und warm gespült und 5 Minuten bei 100°C in Gegenwart eines handelsüblichen Waschmittels gewaschen. Der Farbstoff ist fast vollständig auf dem Gewebe fixiert. Man erhält eine olivgrüne Färbung mit sehr guten Licht-, Wasch- und Reibechtheiten.

Beispiel 21

23 Teile des Kupplungsproduktes 3-Brom-4-amino-azobenzol → 1-Benzyl-5-aminopyrazol werden zusammen mit 500 Raumteilen Dimethylformamid, 7 Teilen Nickelnitrat-Hexahydrat und 23 Teilen Kaliumcarbonat 10 Stunden bei 80°C gerührt. Zu dem Reaktionsgemisch werden bei gewöhnlicher Temperatur 1000 Raumteile Methanol und anschließend 100 Raumteile Wasser hinzugetropft. Das ausgefällte Umsetzungsprodukt wird abgesaugt, mit Methanol und Wasser gewaschen und in Wasser dispergiert. Der Farbstoff besteht auf Grund seines Brom-Gehaltes von 5,2% möglicherweise aus einem Gemisch des ringoffenen und ringgeschlossenen Nickelkomplexes der Formeln:

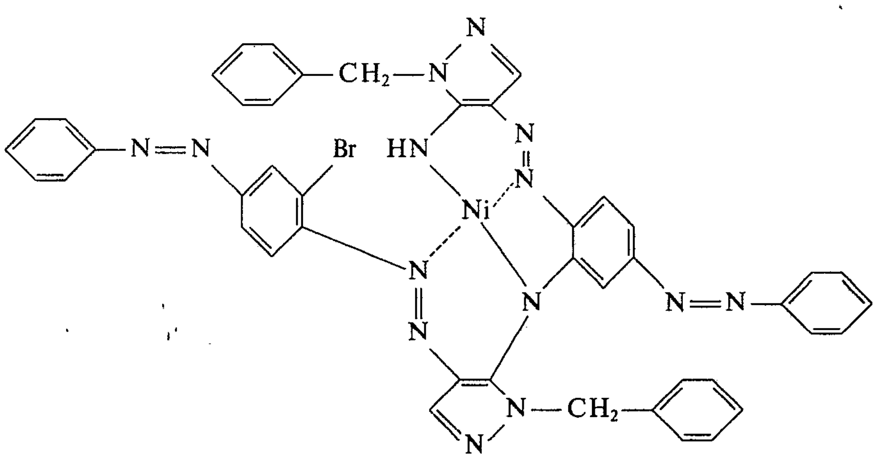

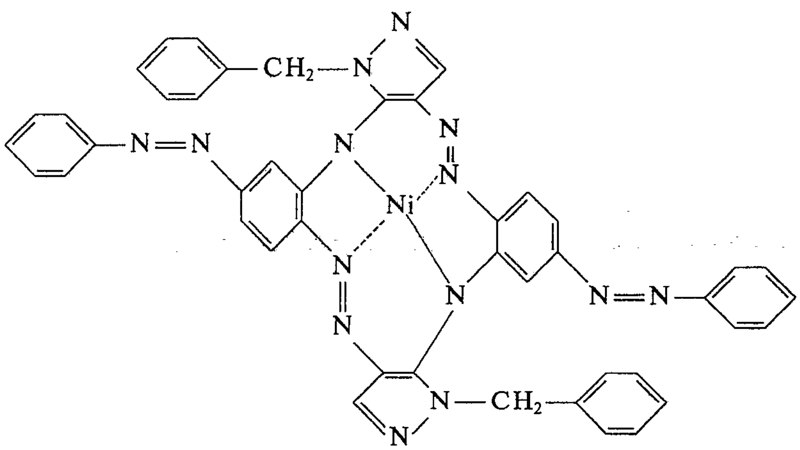

mit weiteren Nebenkomponenten.

10 Teile dieses Farbstoffs werden mit 100 Teilen Polyäthylenoxid vom Molekulargewicht 300 und 790 Teilen einer 3%igen Alginatverdickung zu einer Farbe vermischt, mit der ein Mischgewebe aus Polyester/Baumwolle (Gewichtsverhältnis 65 : 35) im Rotationsfilmdruck bedruckt und anschließend bei 100°C getrocknet wird. Danach behandelt man 2 Minuten bei 200°C mit Heißdampf, spült den Druck kalt, seift ihn kochend, spült wiederum kalt und trocknet. Man erhält einen licht-, wasch-, lösungsmittel- und sublimationsechten gelbstichigen Orangedruck auf weißem Grund. Ein gleiches Ergebnis resultiert beim Druck auf reinem Baumwollgewebe.

Beim Einsatz der folgenden Ausgangsverbindungen werden je nach Reaktionstemperatur und Reaktivität des auszutauschenden Halogens mehr oder weniger ringgeschlossene, nickelhaltige Farbstoffe erhalten.

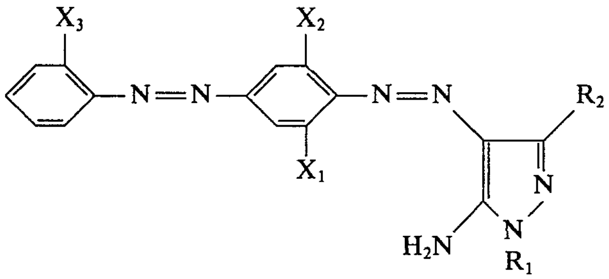

| Bsp. | $X_1$ | $X_2$ | $X_3$ | $R_1$ | $R_2$ | Nickel-Komplex Farbton | Substrat |
|---|---|---|---|---|---|---|---|
| 22 | —Br | —H | —H | 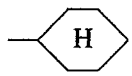 | —H | braun | BW/PES |
| 23 | —Br | —H | —H | 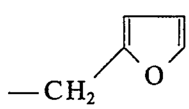 | —H | braun | BW/PES |
| 24 | —Br | —H | —H | $-CH_2-CH(C_2H_5)-C_4H_9$ | —H | braun | BW/PES |
| 25 | —Br | $-CH_3$ | $-CH_3$ | 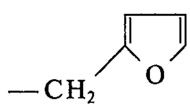 | —H | braun | BW/PES |
| 26 | —Br | $-CH_3$ | $-CH_3$ | 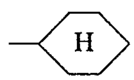 | —H | braun | BW/PES |
| 27 | —Br | $-CH_3$ | $-CH_3$ | 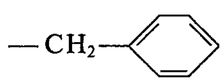 | —H | braun | BW/PES |
| 28 | —Br | —Br | —H | 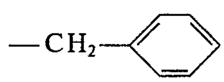 | —H | braun | BW/PES |
| 29 | —Br | —Br | —H | 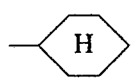 | —H | braun | BW/PES |
| 30 | —Br | —Br | —H | 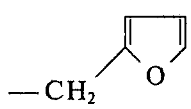 | —H | braun | BW/PES |

Beispiel 31

In 250 Raumteilen Dimethylformamid werden 7 Teile Nickelnitrat-Hexahydrat und 25 Teile Kaliumcarbonat zusammen mit 24 Teilen des getrockneten, pulverförmigen Farbstoffes 1-Amino-2-brom-anthrachinon → 1-Benzylaminopyrazol 7 Stunden bei 50°C gerührt. Nach Erkalten fügt man zum Reaktionsgemisch unter weiterem Rühren 250 Raumteile Methanol allmählich hinzu, saugt den ausgefällten nickelhaltigen Farbstoff ab und wäscht ihn mit Methanol und Wasser. Er liegt nach dem Trocknen im Vakuum bei 70°C als blauschwarzes Pulver vor, das sich in heißem N-Methylpyrrolidon mit trübblauer Farbe löst. In wäßrige Dispersion gebracht, erhält man damit auf Mischgeweben aus BW/PES nach den Verfahren, wie sie in Beispiel 1 zitiert sind, Blaugrau-Töne mit vorzüglichen Eigenschaften.

Der neue Farbstoff entspricht wahrscheinlich der Formel (X = H):

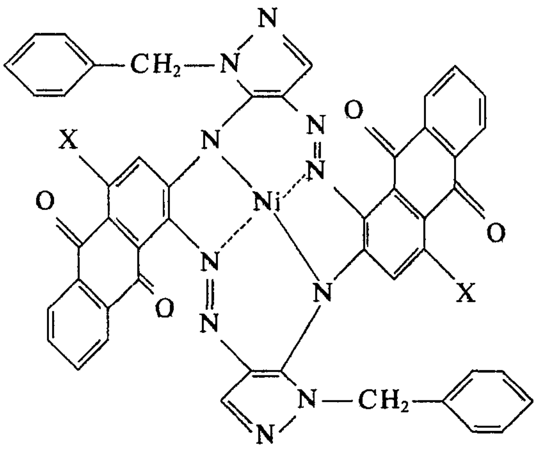

enthält jedoch Nebenkomponenten.

Beispiel 32

Setzt man 28 Teile von 1-Amino-2,4-dibromanthrachinon→ 1-Benzyl-5-aminopyrazol in 500 Raumteilen Dimethylformamid 12 Stunden 40°C zusammen mit 7 Teilen Nickelnitrat-Hexahydrat und 23 Teilen Kaliumcarbonat um, so läßt sich das nickelhaltige Ringschlußprodukt nach Erkalten auf Raumtemperatur durch Absaugen und Waschen mit wenig DMF, dann mit Methanol und Wasser isolieren. Man erhält nach dem Trocknen ein blauschwarzes Pulver obiger Formel mit X = Br, das auf BW/PES hochechte Blaugraufärbungen erzeugt.

Analog werden aus den folgenden Ausgangsverbindungen nickelhaltige Farbstoffe erhalten:

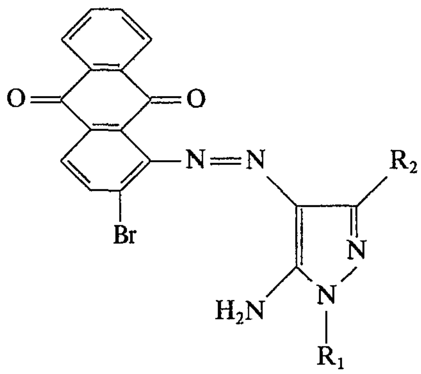

| Bsp. | $R_1$ | $R_2$ | Farbton | Substrat |
|---|---|---|---|---|
| 33 | 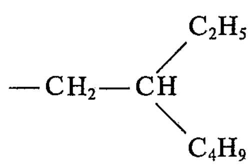 | —H | blaugrau | BW/PES |
| 34 | 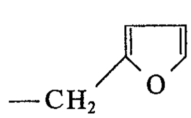 | —H | blaugrau | BW/PES |

Beispiel 35

Verfährt man nach den Angaben des vorletzten Beispiels, setzt jedoch als Ausgangsverbindung die gleiche Menge 2-Amino-3-brom-anthrachinon→ 1-Benzyl-5-aminopyrazol ein, so resultiert nach 10 Stunden bei 70°C und der üblichen Aufarbeitung ein braunes Pulver, das auf Baumwolle, Polyester oder Mischgeweben aus beiden zu echten Braunfärbungen führt.

Beispiel 36

Beim Einsatz von 21 Teilen 1-Amino-2-chloranthrachinon → 1-Cyclohexylaminopyrazol resultiert mit den oben angegebenen Zusätzen nach 10 Stunden bei 60° C ein blauschwarzes Pulver, dessen wäßrige Dispersion auf BW, PES und auf Mischgeweben aus beiden hochechte Blaugrau-Färbungen bzw. -Drucke ergibt.

Beispiel 37

Man rührt das Gemisch aus 40 Teilen 2-Brom-4-nitranilin → 1-Benzylaminopyrazol, 14 Teilen Nickelnitrat-Hexahydrat, 50 Teilen Kaliumcarbonat und 250 Raumteilen Dimethylformamid 20 Stunden bei 70° C. Das so erhaltene Reaktionsprodukt fällt man durch allmählichen Zusatz von 500 Raumteilen Methanol und 300 ml Wasser, saugt es ab und wäscht mit Methanol und Wasser. Das nach dem Trocknen erhaltene dunkelbraune Pulver löst sich in N-Methylpyrrolidon. Aus wäßriger Dispersion erhält man mit dem neuen Farbstoff auf Baumwolle, Polyester oder auf Mischgeweben aus beiden, hoch licht- und naßechte Dunkelbrauntöne.

Beispiel 38

24 Teile 2,6-Dibrom-4-nitranilin → 1-Benzyl-5-aminopyrazol werden in 500 Raumteilen Dimethylformamid zusammen mit 27 Teilen Kaliumcarbonat und 14 Teilen $NiCl_2 \cdot 6 H_2O$ 14 Stunden bei 50° C gerührt. Der erkaltete Ansatz wird abgesaugt, mit Methanol und Wasser gewaschen und getrocknet. Aus dem Filtrat läßt sich durch Zugabe von Methanol und Wasser ein weiterer Anteil des reinen Reaktionsproduktes gewinnen. Der nickelhaltige Farbstoff färbt Polyester in lichtechten Brauntönen.

Beispiel 39

Der aus 43 Teilen 2,4-Dinitro-6-brom-anilin → 1-Cyclohexylaminopyrazol, 250 Raumteilen Dimethylformamid, 14 Teilen Nickelnitrat-Hexahydrat und 50 Teilen Kaliumcarbonat durch 5stündiges Rühren bei 50° C und Absaugen bei Raumtemperatur isolierte Nickelkomplex, nach dem Trocknen ein braunes Pulver, gibt auf Baumwolle wie Polyester licht- und naßechte Braunfärbungen.

Beispiel 40

Aus 21 Teilen 6-Brom-4-nitro-2-cyananilin → 1-Benzyl-5-aminopyrazol erhält man mit den üblichen Zusätzen nach 13stündigem Rühren bei 40° C und Fällen mit Methanol und Wasser ein braunes Pulver, dessen wäßrige Dispersion auf Baumwolle, Polyester und deren Mischgeweben, hoch licht- und naßechte Brauntöne liefert.

Beispiel 41

Man rührt das Gemisch aus 20 Teilen 2,6-Dibromanilin-4-carbonsäureäthylester → 1-Benzylaminopyrazol, 14 Teilen Nickelnitrat-Hexahydrat, 47 Teilen Kaliumcarbonat und 1000 Raumteilen Dimethylformamid 6 Stunden bei 60° C und isoliert das Umsetzungsprodukt durch Absaugen und Nachwaschen mit Methanol und Wasser. Man erhält nach dem Trocknen bei 60° C ein braunes Pulver, dessen wäßrige Dispersion unter den in Beispiel 1 zitierten Bedingungen auf Baumwolle echte Braunfärbungen ergibt.

Der Farbstoff entspricht im wesentlichen wahrscheinlich der Formel

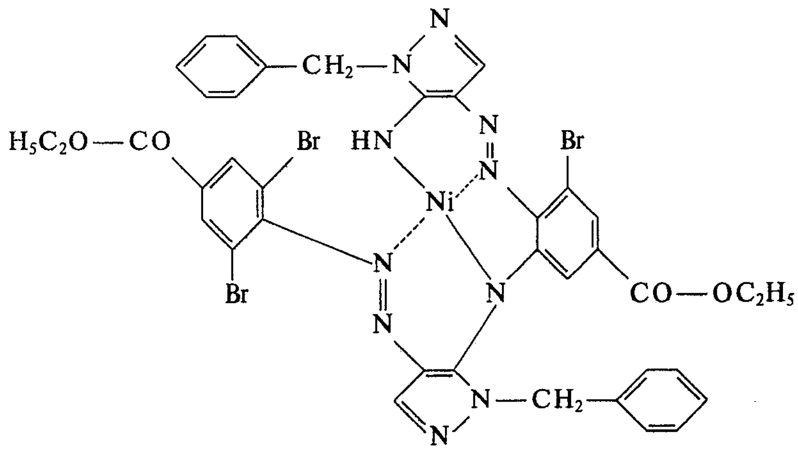

Beispiel 42

Die Mischung aus 10 Teilen 2,4,6-Trichloranilin → 1-Benzylaminopyrazol, 13 Teilen 2,4,6-Tribromanilin → 1-Benzyl-5-aminopyrazol, 7 Teilen Nickelnitrat-Hexahydrat, 25 Teilen Kaliumcarbonat und 500 Teilen Dimethylformamid wird 6 Stunden bei 100° C gerührt, das Reaktionsprodukt bei gewöhnlicher Temperatur abgesaugt, mit etwas Dimethylformamid, dann mit Methanol und Wasser gewaschen und getrocknet. Man erhält ein olivfarbenes Pulver, löslich in N-Methylpyrrolidon, das in Polystyrol hoch lichtechte Einfärbungen ergibt. Auf Baumwolle, Polyester oder dessen Mischgewebe werden hoch licht- und naßechte Färbungen oder Drucke erhalten.

Der Farbstoff hat im wesentlichen wahrscheinlich die Formel:

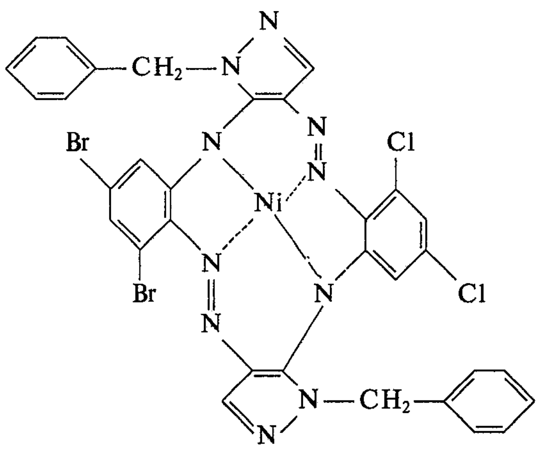

Beispiel 43

Das 6 Stunden bei 120° C gerührte Gemisch aus 12 Teilen 3-Brom-4-amino-azobenzol → 1-Benzylaminopyrazol, 11 Teilen 3-Brom-4-amino-azobenzol → Cyclohexylaminopyrazol, 7 Teilen Nickelnitrat-Hexahydrat, 25 Teilen Kaliumcarbonat und 500 Teilen Dimethylformamid wird nach Erkalten mit 500 Raumteilen Methanol und 60 Teilen Wasser versetzt und der abgesaugte und, wie üblich, gewaschene Rückstand getrocknet. Das so erhaltene dunkelbraune Pulver gibt auf Baumwolle, Polyester oder auf Gemischen aus beiden kräftige Braunfärbungen von hohem Echtheitsniveau.

Beispiel 44

13 Teile 2,4,6-Trichloranilin → 1-Benzyl-5-aminopyrazol, 12 Teile 2,4,6-Trichloranilin → 1-(2-Furylmethyl)-5-aminopyrazol werden zusammen mit 250 Raumteilen Dimethylformamid, 10 Teilen Nickelnitrat-Hexahydrat und 35 Teilen Kaliumcarbonat 7 Stunden bei 100° C gerührt. Nach Absaugen bei Raumtemperatur und dem üblichen Nachwaschen und Trocknen erhält man ein olivgrünes Pulver, das BW/PES-Mischgewebe in echten Olivtönen färbt.

Der Farbstoff ist möglicherweise ein Mischkomplex der Zusammensetzung:

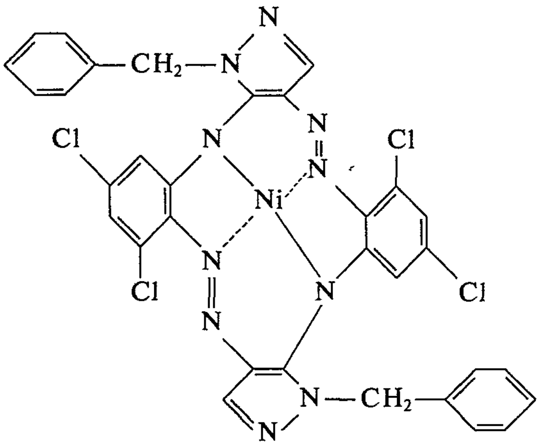

+

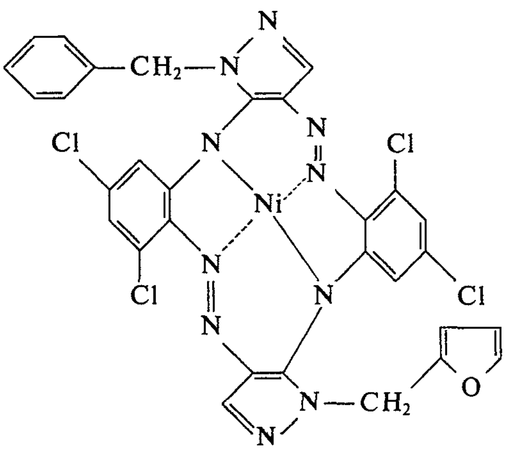

+

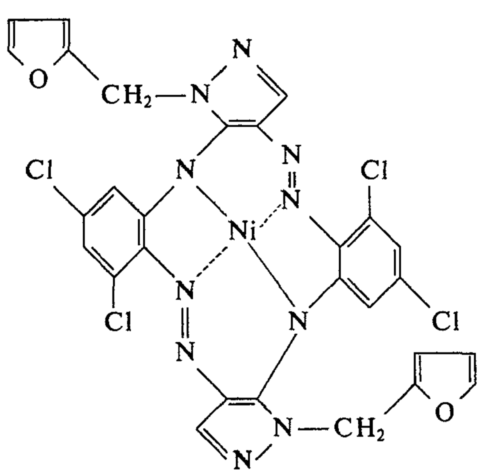

Beispiel 45

25 Teile 2',3-Dimethyl-4-amino-5-bromazobenzol→ 1-(2'-Äthyl)-hexyl-5-aminopyrazol werden zusammen mit 7 Teilen Nickelnitrathexahydrat, 23 Teilen Kaliumcarbonat und 100 Raumteilen Dimethylformamid 6 Stunden bei 100°C gerührt. Nach dem Erkalten fällt man den nickelhaltigen Farbstoff durch Zusatz von 250 Raumteilen Methanol aus. Er wird dann abgesaugt, mit Methanol und Wasser gewaschen und bei Raumtemperatur getrocknet. Das so erhaltene dunkelbraune Pulver eignet sich wegen seiner vorzüglichen Löslichkeit in organischen Lösungsmitteln wie Methyläthylketon, Essigester oder Toluol vorzüglich als Solventfarbstoff, weiterhin gibt es kräftige Polystyrol-Einfärbungen. Nach allen Anwendungsarten werden Brauntöne mit hervorragenden Lichtechtheiten erhalten.

Beispiel 46

Man rührt die Mischung von 40 Teilen 2,4,6-Trichloranilin → 1-(2′-Äthyl)-hexyl-5-aminopyrazol, 14 Teilen Nickelnitrat-hexahydrat, 47 Teilen Kaliumcarbonat und 250 Raumteilen Dimethylformamid 11 Stunden bei 100°C. Nach dem Erkalten dekantiert man die überstehende Flüssigkeit von dem entstandenem zäh-kristallinen Niederschlag ab und löst diesen durch Erwärmen in 400 Raumteilen Dimethylformamid. Die so erhaltene klare Lösung wird nach und nach bei 35°C mit 400 Raumteilen Methanol und dann mit 25 Teilen versetzt, wobei sich der nickelhaltige Farbstoff kristallin abscheidet, der abgesaugt und mit Methanol gewaschen wird. Nach dem Trocknen bei Raumtemperatur erhält man ein dunkelolivfarbenes Pulver, das sich leicht in Methyläthylketon, Essigsäureäthylester, Toluol, Äthanol oder Äthylglykol mit olivgrüner Farbe löst und sich deshalb vorzüglich als Solventfarbstoff eignet, der eine hohe Lichtechtheit aufweist. Ebenso werden in Polystyrol hoch lichtechte Olivfärbungen erhalten.

Beispiel 47

28 Teile 3,5-Dibrom-4-aminoazobenzol → 1-Benzyl-5-aminopyrazol werden in 500 Raumteilen Dimethylformamid mit den üblichen Zusätzen 14 Stunden bei 50°C gerührt. Nach dem Erkalten des Reaktionsansatzes wird aus dessen Filtrat der nickelhaltige Farbstoff durch Zusatz von 500 Raumteilen Dimethylformamid und 100 Teilen Wasser ausgefällt und, wie üblich, isoliert. Das getrocknete Pulver, dessen wäßrige Dispersion auf BW/PES echte Brauntöne erzeugt, entspricht wahrscheinlich der Formel

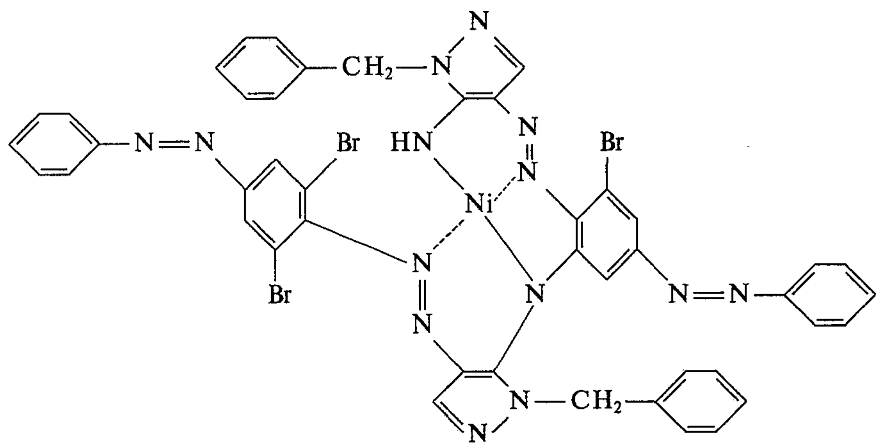

Beispiel 48

Die Mischung aus 24 Teilen 3-Brom-4-Aminonaphtalsäure-3′-methoxypropylimid → 1-Benzyl-5-aminopyrazol, 7 Teilen Nickelnitrat-hexahydrat, 23 Teilen Kaliumcarbonat und 250 Teilen Dimethylformamid wird 6 Stunden bei 60°C gerührt und das Umsetzungsprodukt nach dem Erkalten durch Zugabe von 750 Raumteilen Methanol ausgefällt. Nach dem üblichen Isolieren und Trocknen erhält man ein dunkelbraunes Pulver, das auf BW/PES lichtechte rotstichige Braunfärbungen ergibt. Der Farbstoff entspricht der wahrscheinlichen Formel:

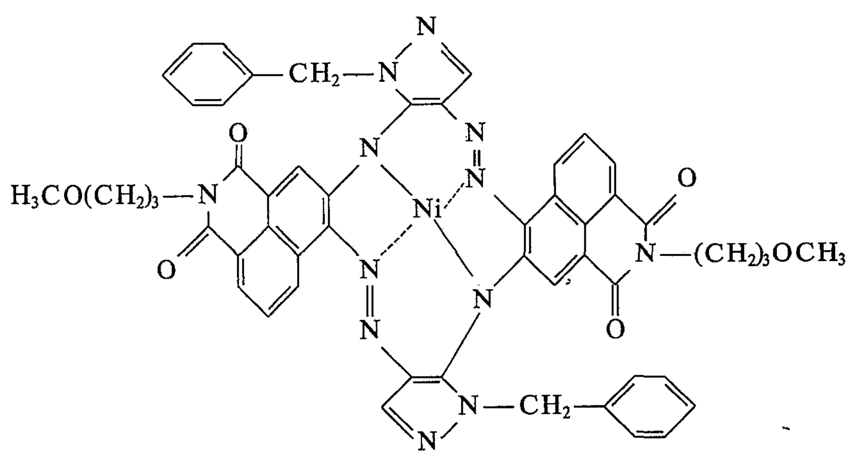

## Beispiel 49

Verwendet man in Beispiel 1 an Stelle von 500 Raumteilen Dimethylformamid 500 Raumteile Dimethylsulfoxid oder 200 Raumteile N-Methylpyrrolidon, so wird unter den sonst gleichen Reaktionsbedingungen der gleiche nickelhaltige Farbstoff wie in Beispiel 1 erhalten.

## Beispiel 50

Ersetzt man in Beispiel 3 den dort angegebenen Ausgangsfarbstoff durch 2,4-Difluor-6-bromanilin → 1-Cyclohexyl-5-aminopyrazol, so wird ein analoger Nickelkomplex erhalten, der in Polystyrol hochlichtechte grüne Einfärbungen ergibt.

## Beispiel 51

22 Teile des Kupplungsproduktes der Formel

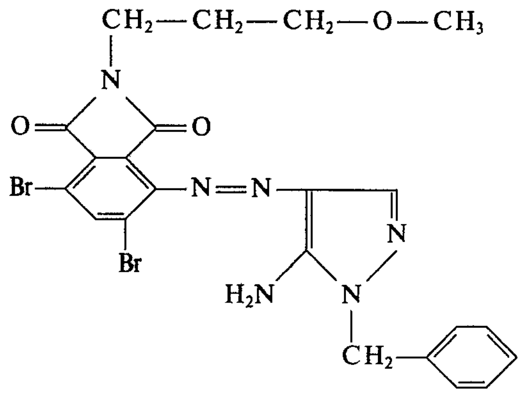

werden zusammen mit 250 Raumteilen Dimethylformamid, 7 Teilen Nickelnitrat-Hexahydrat und 23 Teilen Kaliumcarbonat 6 Stunden bei 40°C gerührt. Das Reaktionsprodukt wird nach dem Erkalten durch Zugabe von 250 Raumteilen Methanol ausgefällt, abgesaugt, gewaschen und getrocknet. Man erhält ein rotbraunes Pulver, das auf Baumwolle, Polyester und Mischgeweben aus beiden echte Bordotöne ergibt. Einen analog gebauten Nickelkomplex erhält man unter den gleichen Bedingungen, wenn an Stelle des Benzylrestes im Ausgangsfarbstoff ein Cyclohexylrest steht.

## Beispiel 52

24 Teile des Kupplungsproduktes der Formel

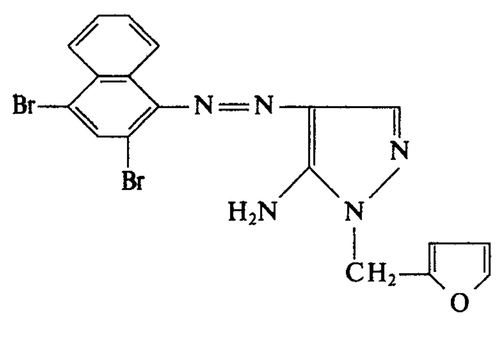

werden in 350 Raumteilen Dimethylformamid unter Zugabe von 7 Teilen Nickelnitrat, Hexahydrat und 23 Teilen Kaliumcarbonat 5 Stunden bei 100°C gerührt. Nach dem Erkalten werden 500 Raumteile Methanol zugesetzt und der so ausgefällte braune Nickelkomplex auf übliche Weise isoliert. Er färbt PES, BW und Mischgewebe aus beiden in kräftigen Brauntönen mit vorzüglichen Echtheiten.

Beispiel 53

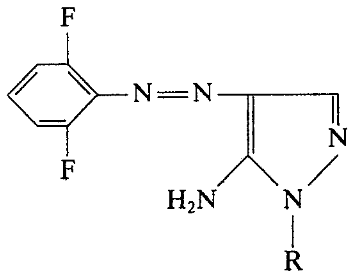

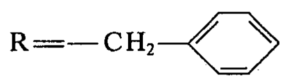 oder 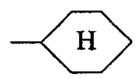

Jeweils 30 Teile eines der Kupplungsprodukte obiger Formel werden zusammen mit 14 Teilen Nickelnitrat-Hexahydrat, 47 Teilen Kaliumcarbonat und 500 Raumteilen Dimethylformamid so lange (6 bis 12 Stunden) bei 100°C gerührt, bis vollständige Umsetzung dünnschichtgramatografisch nachzuweisen ist. Nach dem Erkalten wird der auskristallisierte Nickelkomplex abgesaugt und wie üblich gewaschen und getrocknet. Man erhält jeweils ein dunkelgrünes Pulver, das auf PES, BW und in Polystyrol gelbgrüne Färbungen mit hervorragenden Eigenschaften ergibt.

Beispiel 54

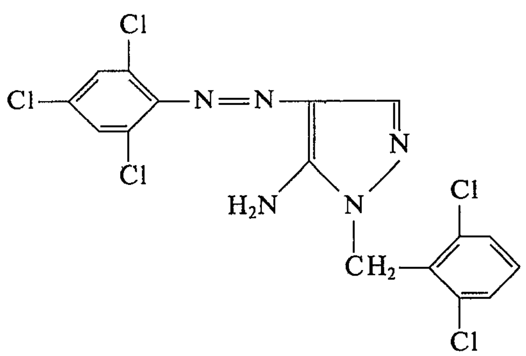

Werden 21 Teile des Farbstoffes vorstehender Formel 8 Stunden bei 100°C mit den üblichen Zusätzen gerührt und kalt isoliert, so resultiert ein olivfarbener Nickelkomplex, der in Polystyrol eingefärbt, Olivtöne mit vorzüglichen Lichtechtheiten ergibt.

**Patentansprüche**

1. Nickelkomplexfarbstoffe, erhältlich durch Erhitzen einer oder mehrerer Verbindungen der allgemeinen Formel I

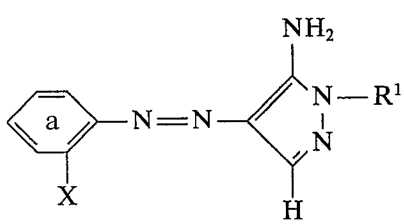

in der

$R^1$ $C_1$- bis $C_{10}$-Alkyl, Cyclohexyl, Methylcyclohexyl, gegebenenfalls durch Chlor oder Methyl substituiertes Phenyl-$C_1$- bis $C_4$-alkyl oder Furylmethyl und

X Fluor, Chlor, Brom oder Phenoxy sind und der Ring a noch zusätzlich substituiert sein kann,

in Gegenwart säurebindender Mittel und von Nickel abgebenden Verbindungen in organischen Lösungsmitteln.

2. Nickelkomplexe gemäß Anspruch 1, wobei der Ring a noch durch Fluor, Chlor, Brom, Trifluormethyl, $C_1$- bis $C_4$-Alkyl, Cyclohexyl, $C_1$- bis $C_4$-Alkoxy, Aroxy, Cyan, Nitro, $C_1$- bis $C_4$-Alkoxysulfonyl, Arylsulfonyl, Carbonester, gegebenenfalls substituiertes Carbamoyl oder

Sulfamoyl, gegebenenfalls substituiertes Phenylazo oder Phthaloyl substituiert sein kann.

3. Nickelkomplexe gemäß Anspruch 1, wobei der Ring a keine weiteren Substituenten trägt oder weiter durch Fluor, Chlor, Brom oder Phenylazo substituiert ist.

4. Nickelkomplexe gemäß Anspruch 1, wobei

X Fluor, Chlor oder Brom ist.

5. Nickelkomplexe gemäß Anspruch 1, wobei

$R^1$ Cyclohexyl, Benzyl oder Furylmethyl ist.

6. Verwendung der Verbindungen gemäß Anspruch 1 zum Färben von cellulosehaltigem Textilmaterial oder Kunststoffen oder als Solventfarbstoffe oder Pigmente.

**Claims**

1. A nickel complex obtained by heating one or more compounds of the general formula I

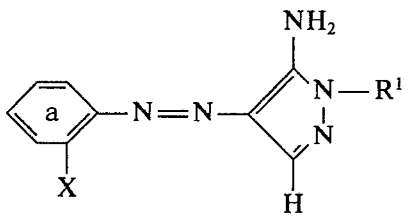

where

$R^1$ is $C_1-C_{10}$-alkyl, cyclohexyl, methylcyclohexyl, phenyl-$C_1-C_4$-alkyl optionally substituted by chlorine or methyl, or furylmethyl, and

X is fluorine, chlorine, bromine or phenoxy, and the ring a may additionally be substituted,

in an organic solvent, in the presence of an acid acceptor and of a nickel donor.

2. A nickel complex as claimed in claim 1, wherein the ring a may additionally be substituted by fluorine, chlorine, bromine, trifluoromethyl, $C_1-C_4$-alkyl, cyclohexyl, $C_1-C_4$-alkoxy, aroxy, cyano, nitro, $C_1-C_4$-alkylsulfonyl, arylsulfonyl, a carboxylic acid ester group, unsubstituted or substituted carbamyl or sulfamyl, unsubstituted or substituted carbamyl or sulfamyl, unsubstituted or substituted phenylazo or phthaloyl.

3. A nickel complex as claimed in claim 1, wherein the ring a does not bear any further substitutents or is further substituted by fluorine, chlorine, bromine or phenylazo.

4. A nickel complex as claimed in claim 1, wherein X is fluorine, chlorine or bromine.

5. A nickel complex as claimed in claim 1, wherein $R^1$ is cyclohexyl, benzyl or furylmethyl.

6. The use of a compound as claimed in claim 1 for dyeing cellulose-containing textile material or colouring plastics or as solvent dyes or pigments.

**Revendications**

1. Colorants complexes du nickel qui peuvent être obtenus par chauffage d'un ou de plusieurs composés de formule générale I

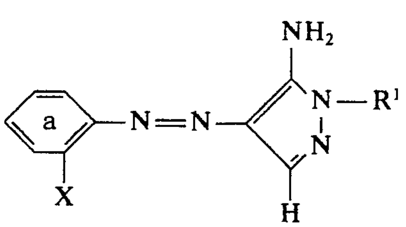

dans laquelle:

$R^1$ représente un alcoyle en $C_1$ à $C_{10}$, un cyclohexyle, un méthylcyclohexyle, un phénylalcoyle en $C_1$ à $C_4$ éventuellement substitué par un chlore ou un méthyle, ou un furylméthyle et

X représente un fluor, un chlore, un brome ou un phénoxy et le noyau a peut être encore substitué en plus,

en présence d'agents fixant les acides et de composés qui cèdent du nickel, dans des solvants organiques.

2. Complexes du nickel selon la revendication 1, dans lesquels le noyau a peut être encore substitué par un fluor, un chlore, un brome, un trifluorométhyle, un alcoyle en $C_1$ à $C_4$, un cyclohexyle, un alcoxy en $C_1$ à $C_4$, un aroxy, un cyano, un nitro, un alcoxysulfonyle en $C_1$ à $C_4$, un arylsulfonyle, un ester carboxylique, un carbamoyle ou sulfamoyle éventuellement substitué, un phénylazo éventuellement substitué ou un phtaloyle.

3. Complexes du nickel selon la revendication 1, dans lesquels le noyau a ne porte aucun autre substituant ou est encore substitué par un fluor, un chlore, un brome ou un phénylazo.

4. Complexes du nickel selon la revendication 1, dans lesquels X est un fluor, un chlore ou un brome.

5. Complexes du nickel selon la revendication 1, dans lesquels $R^1$ est un cyclohexyle, un benzyle ou un furylméthyle.

6. Utilisation des composés selon la revendication 1 pour la teinture de matières textiles cellulosiques ou de matières synthétiques, comme colorants à solvant ou comme pigments.